# EUROPÄISCHE PATENTSCHRIFT

(11) **EP 0 770 227 B1**
(45) Veröffentlichungstag und Bekanntmachung des Hinweises auf die Patenterteilung: **25.03.1998**
(21) Anmeldenummer: 95924973.1
(22) Anmeldetag: 05.07.1995
(51) Int. Cl.: G03C 5/26, G03H 1/04, G02B 5/32

(54) **STABILISIERUNG VON HOLOGRAPHISCHEN TRÄGERMATERIALIEN**
STABILISATION OF HOLOGRAPHIC SUBSTRATES
STABILISATION DE MATERIAUX SUPPORTS HOLOGRAPHIQUES

(30) Priorität: 09.07.1994 DE 4424268
(43) Veröffentlichungstag der Anmeldung: 02.05.1997
(73) Patentinhaber: Müller, Helmut Frank Ottomar, Prof. Dr.-Ing., D-50933 Köln (DE)
(72) Erfinder: GUTJAHR, Jörg, D-51588 Nümbrecht (DE)
(74) Vertreter: Jönsson, Hans-Peter, Dr.Dipl.-Chem.
(86) Internationale Anmeldenummer: EP9502595
(87) Internationale Veröffentlichungsnummer: WO9602019

(56) Entgegenhaltungen:
- WO-A-85/00672
- DE-A- 3 840 262
- US-A- 4 187 106

## Beschreibung

Gegenstand der Erfindung ist ein Verfahren zur Stabilisierung von holographischen Trägermaterialien auf der Basis von Gelatine sowie lichtlenkende Wandelemente für Gebäude.

Aus der DE 38 40 262 A1 ist ein transparentes Wandelement bekannt, das eine Beschichtung aufweist, die ein holographisches Beugungsgitter enthält. Dadurch kann in Abhängigkeit von der Art des holographischen Beugungsgitters einfallendes Licht abgelenkt oder reflektiert werden. Das Wandelement eignet sich beispielsweise für Fenster, Raumteile oder Fassadenplatten und kann für die Verbesserung der Raumausleuchtung mit Tageslicht, für die Reflexion von Wärmestrahlung oder für Display-Zwecke eingesetzt werden.

Holographische Trägermaterialien werden nach dem Belichten mit Verfahren entwickelt, die prinzipiell auf dem Gebiet der Photographie, beispielsweise aus Ullmanns Enzyklopädie der technischen Chemie, 4. Auflage, Bd.18, Stichwort "Photographie", 1979, bekannt sind. Holographische Trägermaterialien, die insbesondere als lichtlenkende Wandelemente für Gebäude eingesetzt werden, sind über einen langen Zeitraum dem einfallenden Licht ausgesetzt. In dem Falle, daß ein solches holographisches Trägermaterial noch Reste an Silberhalogenid enthält, tritt ein Nachdunkeln auf. P. Hariharan; Optical Holography, Cambridge University, Pren (1984) S. 104, 105 beschreibten ein Verfahren, das zu holographischen Trägermaterialien führt, die lichtstabil sein sollen. Bei diesem Verfahren, das speziell auf die Behandlung von Photoplatten vom Typ 649 F der Firma Kodak angepaßt ist, wird das Trägermaterial nach dem Belichten entwickelt und nach dem Unterbrechen des Entwicklungsprozesses in ein Bleichbad auf der Basis eines oxidativen Vernetzungsmittels getaucht, um das entwickelte Silber wieder zu Ag⁺ zu oxidieren und dabei die Gelatineschicht lokal zu härten. Die von den Autoren angegebene Effizienz von 70 % ist für technische Anwendungen nicht ausreichend, da hier wenigstens 90 % erforderlich sind. Nacharbeitungen des Verfahrens ergaben für das Hologramm keine meßbare Effizienz. Die Überwindung dieses Problems ist Aufgabe der vorliegenden Erfindung.

Das vorstehend genannte Problem wird gelöst durch ein Verfahren zur Stabilisierung von holographischen Trägermaterialien auf der Basis von Gelatine, dadurch gekennzeichnet, daß man das Trägermaterial nach dem (i) Belichten, (ii) Entwickeln und (iii) Unterbrechen, (iv) bei einem pH-Wert von wenigstens 3 oder mehr mit einem Bleichbad auf der Basis eines oxidativen Vernetzungsmittels versetzt, bevor nach dem (v) Wässern, (vi) Fixieren, (vii) weiteren Wässern und (viii) einem Schlußbad, (ix) das Trägermaterial durch Einsatz eines oder mehrerer hintereinander geschalteter Bäder enthaltend ein mit Wasser mischbares, die gehärtete Gelatinestruktur nicht beeinflussendes Lösungsmittel entwässert wird.

Mit Hilfe der vorliegenden Erfindung ist es möglich, bisher bekannte holographische Träger auf der Basis von Gelatine außerordentlich gut zu stabilisieren. Nach dem üblichen Belichten und Entwickeln des holographischen Beugungsgitters wird das holographische Trägermaterial auf der Basis von Gelatine in ein Stopbad eingebracht. Als photographische Entwickler können an sich im Stand der Technik bekannte Entwicklungsmaterialien eingesetzt werden. Besonders bewährt hat sich erfindungsgemäß ein Zweikomponenten-Entwickler auf der Basis von Ascorbinsäure als Komponente A und als Komponente B eine alkalische Natriumhydrogenphosphatlösung, die ein Kalkschutzmittel enthält. Gegebenenfalls können auch an sich bekannte Entwicklerzusätze wie Puffer, Oxidationsschutzmittel oder Schleierverhütungsmittel eingesetzt werden.

Um den Entwicklungsvorgang rasch und möglichst gleichmäßig abzubrechen, wird ein aus dem Bereich der Photographie bekanntes saures Unterbrecherbad eingesetzt. Besonders bewährt hat sich auch erfindungsgemäß eine 0,5 bis 2 Gew.-%ige wässrige Lösung von Essigsäure. Während üblicherweise im Gebiet der Photographie ein derartiges Unterbrecherbad Mittel zur Härtung von Gelatine enthalten kann, beispielsweise Formaldehyd oder ein Aluminiumsalz (Härtestopbad), wird erfindungsgemäß in diesem Verfahrensschritt kein Härtungsvorgang durchgeführt, da dieser in einem separaten Verfahrensschritt vor der Fixage eingerichtet wird.

Wesentlicher Kern der vorliegenden Erfindung ist das Bleichbad auf der Basis eines oxidativen Vernetzungsmittels. Das oxidative Vernetzungsmittel, beispielsweise eine Kombination aus (a) einer wässrigen, sauren, gepufferten Alkalimetallhalogenid-Lösung und (b) einer wässrigen Lösung eines oxidativen Vernetzungsmittels ist in der Lage, entwickelte Silberkristalle selektiv in der Gelatineschicht zu oxidieren. Durch die Redoxreaktion mit dem elementaren Silber wird an eben diesen Stellen das Silber in Halogenid umgewandelt und gleichzeitig die Gelatine punktuell in einem Maße vernetzt, die sich von Bereichen der Gelatine unterscheiden, in denen kein freies Silber vorliegt. Hierdurch entsteht durch den unterschiedlichen Vernetzungsgrad ein Dichtegradient der Gelatine von belichteten und unbelichteten Stellen. Wird anschließend in einem an sich aus der Photographie bekannten Fixierbad das gesamte Silberhalogenid aus dem holographischen Trägermaterial herausgelöst, so erhält man ein holographisches Trägermaterial, das vollständig silberfrei ist, keinen print-out und kein Verblassen mehr zeigt.

Zwar ist prinzipiell die Stabilisierung von photographischen Trägermaterialien im Stand der Technik bekannt, wobei das nichtentwickelte Silberhalogenid nur zum Teil herausgelöst wird, der größte Teil jedoch als weitgehend lichtunempfindliche Silberverbindung mit den eingedrungenen Bestandteilen des Stabilisierbades in der photographischen Schicht bleibt. Die sauren Stabilisierungsbäder des Standes der Technik enthalten Thiosulfat, Rhodanid, Thioharnstoff oder organische Schwefelverbindungen wie z. B. Thioglykolsäure, Thiosalicylsäure oder Mercaptopyrimidiniumderivate in relativ großer Menge.

Erfindungsgemäß ist jedoch das stabilisierende Bleichbad aus einer Zweikomponenten-Mischung aufgebaut. Ein Teil (I) der Mischung besteht vorzugsweise aus einer gepufferten wässrigen Alkalimetallhalogenid-Lösung mit einem pH-Wert von etwa 4 oder mehr. Erfindungsgemäß wurde gefunden, daß pH-Werte im Bereich oberhalb 3 geeignet sind, die Vernetzung der Gelatine zu bewirken, während übliche stark saure Lösungen nicht geeignet sind, die Redoxreaktion von Silber und oxidativen Vernetzungsmittel derart zu steuern, daß an den belichteten Stellen des holographischen Trägermaterials eine Härtung der Gelatine eintritt, die sich von anderen Bereichen unterscheidet, in denen kein Silber vorliegt. Vorzugsweise enthält die Komponente (I) Natriumcitrat, Schwefelsäure und Kaliumbromid, während die wässrige Lösung (II) des oxidativen Vernetzungsmittels vorzugsweise Alkalimetallchromat, insbesondere Kaliumdichromat enthält. Die Mengen der einzusetzenden Verbindungen sind im wesentlichen dem Ausführungsbeispiel zu entnehmen. Dem Fachmann ist es aber durchaus ohne erfinderisches Überlegen möglich, weitere geeignete Mengenbereiche der einzelnen Bestandteile aufzufinden.

Im Anschluß an das härtende Bleichbad wird erfindungsgemäß das holographische Trägermaterial gewässert. Im anschließenden Fixierbad wird das gesamte Silberhalogenid aus dem holographischen Trägermaterial herausgelöst. Hierzu können auch erfindungsgemäß bekannte Lösemittel für Silberhalogenide wie Ammoniak, Thioharnstoff, heterocyclische Mercapto-Verbindungen, konzentrierte Alkalihalogenid-Lösungen, Cyanide, Rhodanide und Thiosulfate eingesetzt werden. Vorzugsweise werden jedoch Natrium- und Ammoniumthiosulfat als nicht härtende Fixierbäder eingesetzt. Besonders bevorzugt enthält das nicht härtende Fixierbad Alkalimetallthiosulfat, Alkalimetallsulfit und Alkalimetallhydrogensulfit.

Um beständige holographische Beugungsgitter zu erhalten, ist eine gründliche Wässerung nach der Fixage unerläßlich. Sonst kann es zu einer Schleierbildung in den Lichterpartien kommen, da sich der nicht ausgewaschene Silberthiosulfat-Komplex zu Sulfid zersetzt.

Durch ein Schlußbad, das ein aus der Photographie bekanntes Netzmittel, beispielsweise Agepon® oder Ilfotol® enthält, wird erreicht, daß die nachfolgenden Bäder den Film gleichmäßig benetzen.

Im Anschluß an das Schlußbad ist es erfindungsgemäß erforderlich, das holographische Trägermaterial mit einem oder mehreren hintereinander geschalteten Bädern, enthaltend ein mit Wasser mischbares, die gehärtete Gelatinestruktur nicht beeinflussendes Lösungsmittel zu entwässern. Hierzu eignet sich insbesondere Ethanol, 2-Propanol und deren Gemische. Bei der Hintereinanderschaltung von wenigstens 2 Bädern mit abnehmendem Wassergehalt sind besonders gute Ergebnisse erzielbar. Wird beispielsweise in einem ersten Bad 2-Propanol mit einer Konzentration von 92 bis 96 % in wässriger Lösung und in einem zweiten Schritt wasserfreies Isopropanol eingesetzt, so läßt sich eine vollständige Entwässerung des holographischen Trägermaterials auf der Basis von Gelatine erreichen. Wird darüber hinaus in einem weiteren Arbeitsschritt das Lösungsmittel abgestriffen und durch leichte Erwärmung entfernt, so ist ein stabilisiertes holographisches Trägermaterial erhältlich.

Ein weitere Ausführungsform der vorliegenden Erfindung besteht in lichtlenkenden Wandelementen für Gebäude, bestehend aus einem holographischen Trägermaterial, das nach dem Verfahren wie oben definiert erhältlich ist, wobei das Trägermaterial auf einem lichtdurchlässigen oder lichtundurchlässigen Substrat aufgebracht ist. Somit ist eine transparentes oder reflektierendes Wandelement erhältlich, das eine Beschichtung aufweist, die ein holographische Beugungsgitter enthält. Im Gegensatz zu Elementen des Standes der Technik ist jedoch die Haltbarkeit, insbesondere die Stabilität, des holographischen Trägermaterials verbessert.

### Ausführungsbeispiel

### 1. Entwicklung:

Ein holographisches Trägermaterial wird im Verlauf von 5 min mit einer Entwicklerkombination, bestehend aus:
A) 36 g/l Ascorbinsäure und
B) 56,8 g/l Natriumhydrogenphosphat (Na₂HPO₄), 24 g/l Natriumhydroxid (NaOH) und 2 g/l Kalkschutz (Calgon^{R}) im Verhältnis von 1 : 1 der Komponenten A und B entwickelt.

### 2. Stopbad:

Das Stopbad enthielt 2 % Essigsäure (CH₃COOH).

### 3. Bleichbad:

Das Zweikomponenten-Bleichbad entstand aus:
(I) einer Pufferlösung mit einem pH-Wert von etwa 4,0, hergestellt aus einer Mischung von einer Natriumcitratlösung (1/10 mol/l) entsprechend 21 g/l Zitronensäure (80 Vol.-%) und 20 Vol.-% Natriumhydroxidlösung (1 mol/l). Im Verhältnis von 60 Vol.-Teilen Natriumcitratlösung wurden 40 Vol.-Teile 0,1 normale Schwefelsäurelösung zugegeben. Zu einem Liter dieser Pufferlösung wurden 92 g Kaliumbromid (Kbr) gegeben.

Den zweiten Teil des zweikomponentigen Bleichbades (II) bildete eine wässrige Lösung von 20 g/l Kaliumdichromat (K₂Cr₂O₇).

Das Mischungsverhältnis der Komponente (I) zur Komponente (II) betrug in einem ersten Versuch 10 Teile der Komponente (I) auf 1 Teil der Komponente (II). Bei Erhöhung der Anteile der Komponente (I) auf 20 oder 30 Teile der Komponente (II) wurde ein optimale Härtung und Bleichung der holographischen Trägermaterialien erhalten.

### 4. Wässern:

Im Anschluß an das Bleichbad wurde das holographische Trägermaterial in an sich bekannter Weise gewässert.

### 5. Fixierbad:

Das belichtete, entwickelte und gebleichte holographische Trägermaterial wurde mit einem nicht härtenden Fixierbad im Verlauf von 2 min in Kontakt gebracht, das 250 g/l Natriumthiosulfat (Na₂S₂O₃), 10 g/l Natriumsulfit (Na₂SO₃) und 30 g/l Natriumhydrogensulfit (NaHSO₃) enthielt.

### 6. Wässern:

Im Anschluß an das Bleichbad wurde das holographische Trägermaterial in an sich bekannter Weise gewässert.

### 7. Schlußbad:

Im Schlußbad mit einem Netzmittel Ilfotol® erreicht, das nachfolgende Entwässerungsbad die Schicht gleichmäßig benetzen konnte.

### 8. Entwässerungsbad:

In einem ersten Entwässerungsbad wurde im Verlauf von 2 min das holographische Trägermaterial mit einer wässrigen Lösung von Isopropanol, die 92 bis 96 % Isopropanol enthielt, in Kontakt gebracht.

### 9. Weiteres Entwässerungsbad:

In einem weiteren Entwässerungsbad mit wasserfreiem Isopropanol wurde im Verlauf von 2 min das holographische Trägermaterial in Kontakt gebracht.

### 10. Trocknen:

Nach an sich bekannten Verfahren des Standes der Technik wurde als abschließender Schritt überstehendes Lösungsmittel abgestreift und das restliche Lösungsmittel durch Erwärmen mittels eines Heißluftgebläses aus der photographischen Schicht entfernt.

Hierdurch konnte ein silberfreies holographisches Trägermaterial mit außerordentlicher Stabilität erhalten werden.

## Patentansprüche

1. Verfahren zur Stabilisierung von holographischen Trägermaterialien auf der Basis von Gelatine, dadurch gekennzeichnet, daß man das Trägermaterial nach dem (i) Belichten, (ii) Entwickeln und (iii) Unterbrechen, (iv) bei einem pH-Wert von wenigstens 3 oder mehr mit einem Bleichbad auf der Basis eines oxidativen Vernetzungsmittels versetzt, bevor nach (v) Wässern, (vi) Fixieren, (vii) weiterem Wässern und (viii) einem Schlußbad, (ix) das Trägermaterial durch Einsatz eines oder mehrerer hintereinander geschalteter Bäder, enthaltend ein mit Wasser mischbares, die gehärtete Gelatinestruktur nicht beeinflussendes Lösungsmittel entwässert wird.

2. Verfahren nach Anspruch 1, dadurch gekennzeichnet, daß man ein Bleichbad einsetzt, das aus (I) einer gepufferten wässrigen, sauren Alkalimetallhalogenid-Lösung und (II) einer wässrigen Lösung eines oxidativen Vernetzungsmittels besteht.

3. Verfahren nach Anspruch 2, dadurch gekennzeichnet, daß die wässrige gepufferte Alkalimetallhalogenid-Lösung einen pH-Wert von circa 4 hat.

4. Verfahren nach Anspruch 3, dadurch gekennzeichnet, daß die wässrige gepufferte Alkalimetallhalogenid-Lösung Natriumcitrat, Schwefelsäure und Kaliumbromid enthält.

5. Verfahren nach Anspruch 2, dadurch gekennzeichnet, daß die wässrige Lösung eines oxidativen Vernetzungsmittels Alkalimetallchromat, insbesondere Alkalimetalldichromat enthält.

6. Verfahren nach einem oder mehreren der Ansprüche 1 bis 5, dadurch gekennzeichnet, daß das Fixierbad, insbesondere ein nicht härtendes Fixierbad Alkalimetallthiosulfat, Alkalmetallsulfit und Alkalimetallhydrogensulfit enthält.

7. Verfahren nach einem oder mehreren der Ansprüche 1 bis 6, dadurch gekennzeichnet, daß das Schlußbad ein Netzmittel enthält.

8. Verfahren nach einem oder mehreren der Ansprüche 1 bis 7, dadurch gekennzeichnet, daß man als das mit Wasser mischbare, die gehärtete Gelatinestruktur nicht beeinflußendes Lösungsmittel Ethanol, 2-Propanol oder deren Gemische einsetzt.

9. Verfahren nach Anspruch 8, dadurch gekennzeichnet, daß man wenigstens 2 nacheinander geschaltete Bäder mit abnehmendem Wassergehalt des Bades einsetzt.

10. Verfahren nach Anspruch 9, dadurch gekennzeichnet, daß wenigstens das letzte Bad mit einem wasserfreien Lösungsmittelansatz gefahren wird.

11. Lichtlenkende Wandelemente für Gebäude, bestehend aus einem holographischen Trägermaterial mit einer Effizienz von wenigstens 90 %, erhältlich nach dem Verfahren in einem oder mehreren der Ansprüche 1 bis 10 definiert auf lichtdurchlässigen oder lichtundurchlässigen Substraten.

## Claims

1. A process for the stabilization of holographic support materials based on gelatin, characterized in that after (i) exposing, (ii) developing, and (iii) quenching said support material, there is added thereto (iv) a bleaching bath based on an oxidative cross-linking agent at a pH value of at least 3 or more, and thereafter, following (v) rinsing, (vi) fixing, (vii) additional rinsing and (viii) a final bath, (ix) said support material is dehydrated by the use of one or more baths in series containing a solvent which is water-miscible and does not affect the cured gelatin structure.

2. The process according to claim 1, characterized in that a bleaching bath of (I) a buffered aqueous acidic alkali metal halide solution and (II) an aqueous solution of an oxidative cross-linking agent is used.

3. The process according to claim 2, characterized in that said aqueous buffered alkali metal halide solution has a pH value of about 4.

4. The process according to claim 3, characterized in that said aqueous buffered alkali metal halide solution contains sodium citrate, sulfuric acid and potassium bromide.

5. The process according to claim 2, characterized in that said aqueous solution of an oxidative cross-linking agent contains alkali metal chromate, in particular alkali metal dichromate.

6. The process according to one or more of claims 1 to 5, characterized in that said fixing bath, especially a non-curing fixing bath, contains alkali metal thiosulfate, alkali metal sulfite and alkali metal hydrogensulfite.

7. The process according to one or more of claims 1 to 6, characterized in that said final bath contains a wetting agent.

8. The process according to one or more of claims 1 to 7, characterized in that ethanol, 2-propanol or mixtures thereof are used as said solvent which is water-miscible and does not affect the cured gelatin structure.

9. The process according to claim 8, characterized in that at least 2 baths with decreasing water content are used in series.

10. The process according to claim 9, characterized in that at least the last of said baths is charged with an anhydrous solvent.

11. Light-directing wall elements for buildings made of a holographic support material having an efficiency of at least 90% obtainable by the process as defined in one or more of claims 1 to 10 and applied to transparent or opaque substrates.

## Revendications

1. Procédé de stabilisation de matériaux supports holographiques à base de gélatine, caractérisé en ce que le matériau support, après (i) insolation, (ii) développement et (iii) arrêt, (iv) est mélangé à une valeur de pH au moins égale à 3 ou supérieure avec un bain de blanchiment à base d'un agent de réticulation oxydant, puis, après (v) trempage, (vi) fixation, (vii) nouveau trempage et (viii) un bain de finition, (ix) est déshydraté au moyen d'un ou de plusieurs bains successifs contenant un solvant miscible à l'eau et exempt d'influence sur la structure de la gélatine durcie.

2. Procédé selon la revendication 1, caractérisé en ce que l'on utilise un bain de blanchiment qui se compose (I) d'une solution aqueuse tamponnée d'un halogénure acide de métal alcalin et (II) d'une solution aqueuse d'un agent de réticulation oxydant.

3. Procédé selon la revendication 2, caractérisé en ce que le pH de la solution aqueuse tamponnée d'halogénure de métal alcalin est égal à environ 4.

4. Procédé selon la revendication 3, caractérisé en ce que la solution aqueuse tamponnée d'halogénure de métal alcalin contient du citrate de sodium, de l'acide sulfurique et du bromure de potassium.

5. Procédé selon la revendication 2, caractérisé en ce que la solution aqueuse d'un agent de réticulation oxydant contient du chromate de métal alcalin, en particulier du bichromate de métal alcalin.

6. Procédé selon une ou plusieurs des revendications 1 à 5, caractérisé en ce que le bain de fixation, en particulier un bain non durcissant, contient du thiosulfate de métal alcalin, du sulfite de métal alcalin et de l'hydrogénosulfite de métal alcalin.

7. Procédé selon une ou plusieurs des revendications 1 à 6, caractérisé en ce que le bain de finition contient un agent mouillant.

8. Procédé selon une ou plusieurs des revendications 1 à 7, caractérisé en ce que le solvant miscible à l'eau et exempt d'influence sur la structure de la gélatine durcie qui est utilisé est l'éthanol, le 2-propanol ou des mélanges de ceux-ci.

9. Procédé selon la revendication 8, caractérisé en ce que l'on utilise au moins 2 bains successifs avec une teneur en eau dans le bain décroissante.

10. Procédé selon la revendication 9, caractérisé en ce que le dernier bain au moins est mis en oeuvre avec une charge de solvant anhydre.

11. Eléments de bardage déflecteurs de la lumière composés d'un matériau support holographique ayant une efficacité d'au moins 90 % et pouvant être obtenu grâce au procédé selon une ou plusieurs des revendications 1 à 10, défini sur des substrats transparents ou opaques.
